# EUROPEAN PATENT SPECIFICATION

(11) **EP 4 045 693 B1**
(45) Date of publication and mention of the grant of the patent: **22.04.2026**
(21) Application number: 21849409.4
(22) Date of filing: 30.07.2021
(51) Int. Cl.: C22B 15/00, C22B 3/10, C25C 1/12, C22B 1/00, C22B 1/14, C22B 3/06, C22B 3/18

(54) **RECOVERING METAL FROM METAL-BEARING MATERIAL**
RÜCKGEWINNUNG VON METALL AUS METALLHALTIGEM MATERIAL
RÉCUPÉRATION DE MÉTAL À PARTIR D'UN MATÉRIAU MÉTALLIFÈRE

(30) Priority: 31.07.2020 US 202016944487
(43) Date of publication of application: 24.08.2022
(73) Proprietor: Rio Tinto Technological Resources Inc., South Jordan, Utah 84009 (US)
(72) Inventor: FENNEL, Mark James, South Jordan, Utah 84009 (US); HACKL, Ralph Peter, South Jordan, Utah 84009 (US); BROWN, Paul Leslie, South Jordan, Utah 84009 (US); BURLEY, Adam James, South Jordan, Utah 84009 (US); ALCAYAGA ZÚÑIGA, Javiera del Pilar, South Jordan, Utah 84009 (US); MLADINIC MUÑOZ, Yure Anton, South Jordan, Utah 84009 (US)
(74) Representative: Taylor, Gail
(86) International application number: PCT/US2021/043899
(87) International publication number: WO 2022/026826

(56) References cited:
- CN-A- 1 475 585
- CN-A- 101 191 153
- CN-A- 103 173 614
- CN-A- 105 648 213
- US-A- 4 060 464
- US-A- 5 171 428
- US-A1- 2002 194 963
- US-A1- 2002 194 963
- US-A1- 2013 291 686
- US-A1- 2015 329 936
- US-B1- 6 482 373
- US-B2- 10 563 287
- US-B2- 8 388 728
- US-B2- 8 821 613
- ACAR S ET AL: "Conditions for bioleaching a covellite-bearing ore", HYDROMETALLURGY, ELSEVIER SCIENTIFIC PUBLISHING CY. AMSTERDAM, NL, vol. 77, no. 3-4, 1 June 2005 (2005-06-01), pages 239 - 246, XP004856296, ISSN: 0304-386X, DOI: 10.1016/J.HYDROMET.2004.05.004
- PETERSEN JOCHEN ED - KAKSONEN ANNA H ET AL: "Heap leaching as a key technology for recovery of values from low-grade ores - A brief overview", HYDROMETALLURGY, ELSEVIER SCIENTIFIC PUBLISHING CY. AMSTERDAM, NL, vol. 165, 8 September 2015 (2015-09-08), pages 206 - 212, XP029701417, ISSN: 0304-386X, DOI: 10.1016/J.HYDROMET.2015.09.001

## Description

### TECHNICAL FIELD

The present invention relates to a method of recovering a metal, such as copper or nickel or zinc or cobalt, from a metal sulfide-containing material in a mined material.

The present invention relates to a method of recovering a metal, such as copper or nickel or zinc or cobalt, from a metal sulfide-containing material in a mined material that is "non-economic" from the perspective of recovering the metal from the material using conventional recovery options before the invention was made and, for example, is in stockpiles of "waste" material.

The term "mined material" is understood herein to include material that is mined and transferred from the mine (a) directly to downstream processing operation to recover a metal from the material or (b) to a stockpile. The stockpiled material may be material that can be transferred to the downstream processing operation at a later time. The stockpiled material may be "waste" material that until the invention was made would not be processed later because it was "non-economic" to recover metals from using conventional recovery options available before the invention was made.

The term ʺʺnon-economic" to recover metals from using conventional recovery options" is understood to mean processing options used in commercial mines before the invention was made.

The present invention relates particularly, although by no means exclusively, to a heap leaching method that is characterized by leaching a heap of agglomerates of a metal sulfide-containing material and pyrite, typically pyrite that is available in a mine, such as pyrite derived from mine tailings from a processing plant for recovering metal from a metal sulfide-containing material, such as a metal sulfide mineral.

The present invention also relates to a heap leaching operation that includes a heap containing agglomerates of a metal sulfide-containing material and pyrite, typically pyrite that is available in a mine, such as pyrite derived from mine tailings from a processing plant for recovering metal from a metal sulfide-containing material, such as a metal sulfide mineral.

The present invention also relates to a flotation circuit for an ore processing plant for a metal sulfide-containing material, with the flotation circuit producing a source of pyrite.

The present invention also relates to an ore processing plant for a metal sulfide-containing material.

### BACKGROUND ART

The technical field of the invention is the production of a metal, such as copper or nickel or zinc or cobalt, from a metal sulfide-containing material, such as a metal sulfide mineral, in a mine.

The following description of the invention focuses on copper as one example of a metal in a metal sulfide-containing material, such as a metal sulfide mineral.

Copper is an increasingly important metal for the transition to a low carbon-based global economy.

There are substantial capital and operating cost pressures on mine operators of well-established and new copper mines (which term includes mines in which copper is the only metal recovered and mines in which copper and other valuable metals such as gold are recovered) that have lower average concentrations of copper in copper sulfide-containing materials than was previously the case.

In many instances, the problem of lower copper concentrations in copper sulfide-containing materials, such as copper sulfide-containing minerals, is compounded by the copper being in more refractory copper sulfide-containing minerals than previously, with these minerals being more difficult and expensive to process to recover copper from the minerals.

Mining companies are also very conscious of the importance of operating mines with minimal environmental impact over short and longer terms.

The economics facing copper mine operators mean that there are substantial amounts of copper sulfide-containing material, including mined material and processed forms of mined material (i.e. comminuted), that are non-economic to recover copper from using recovery options available before the invention was made and therefore are not processed to recover copper from copper sulfide-containing material.

Non-economic copper sulfide-containing material is typically stored in stockpiles that are often described as waste rock stockpiles.

The concentration of copper in non-economic copper sulfide-containing material is not an absolute fixed value and will vary from mine to mine and also in an individual mine over time, having regard to capital and operating costs in the mine and factors external to the mine, such as the overall market for copper.

US10,563,287 (to Hackl et al.) describes a method of leaching copper-containing ores, such as chalcopyrite ores, with a leach liquor in the presence of silver and an activation agent that activates silver, whereby the silver enhances copper extraction from copper ores.

CN1101191153 (to Beijing Nonferrous Metal) teaches a pyrite selective inhabitation technique for biological leaching of secondary copper sulphide ores. It involves the use of leaching bacteria containing Thiobacillus ferrooxidansRetech III (T.F.R.III mineral leaching fungus) and two spraying steps of phased intermission and continuity. By optimising bacterial activity, PH value and other conditions, high efficiency selective leaching of the copper sulphide ores can be achieved. US2002/194963 discloses a method for recovering metal values from concentrates of sulfide minerals and US2013/291686 discloses a sulfide ore leaching process.

The present invention provides a method of recovering copper from copper sulfide-containing material, including copper sulfide-containing material, in a mined material that were regarded as "non-economic" to recover metals from using conventional recovery options before the invention was made.

The invention provides a method of recovering other metals, such as nickel or zinc or cobalt, from metal sulfide-containing material, including metal sulfide-containing material, in a mined material that were regarded as "non-economic" to recover metals from using conventional recovery options before the invention was made.

The above description is not an admission of the common general knowledge in Australia or elsewhere.

### SUMMARY OF THE invention

The invention is concerned with maximizing the beneficial use of material produced in a mine that contains metal sulfide-containing material, such as a copper mine that contains copper sulfide-containing material, but equally a nickel, zinc or cobalt mine or a mine producing two or more of these metals, from metal sulfide-containing material in a mined material, and minimizing the extent to which processing materials, such as reagents, from outside the mine are required.

One advantage of the invention is to provide an opportunity to maximize the recovery of a metal, such as copper or nickel or zinc or cobalt, from a mine that contains a metal sulfide-containing material in a mined material and to minimize the costs to do so.

Another advantage of the invention is to provide an opportunity to minimize the environmental impact of the mine.
(a) In broad terms the invention provides a method of recovering a metal, such as copper, nickel or zinc or cobalt, from a metal sulfide-containing material in a mined material, such as a metal sulfide-containing material that is "non-economic" to recover metals from using conventional recovery options.

In more particular terms, the invention provides a method of recovering copper from a low-grade copper-containing as described in claim 1.

As noted above, the term "mined material" is understood herein to include material that is mined and transferred from the mine (a) directly to downstream processing operation to recover a metal from the material or (b) to a stockpile and processed later.

The metal sulfide-containing material may be a metal sulfide-containing material that is "non-economic" to recover metals from using conventional recovery options.

The metal sulfide-containing material may be a copper sulfide-containing material.

The copper sulfide-containing material may be any suitable copper sulfide-containing material, such as a copper sulfide mineral.

One example of the copper sulfide-containing material is rocks that contains low concentrations of copper and, for example, may be regarded as waste rock.

The copper sulfide-containing material may be in the form of as-mined material or waste stockpiles of copper sulfide-containing material having low grades, i.e. low concentrations, of copper in the material.

In other words, the copper sulfide-containing material may be as-mined material or stockpiled material that is considered to be too low grade to be economically processed in flotation and other wet processing systems for recovering copper from copper-containing ores and concentrates.

The term "low grade" as used in relation to "copper sulfide-containing material" mentioned above is understood herein to be a term that is dependent on currently available technology and the current price of copper, and that material currently considered "low grade" may be considered valuable material in the future depending on technological developments and the future price of copper.

More particularly, the copper sulfide-containing material may be as-mined material or stockpiled material that is too low-grade to be economically processed by any other processing method, including heap leaching.

In the context of the preceding paragraphs, the term "low concentrations of copper" is understood to mean an average copper concentration of ≤ 1.5% by weight, typically ≤ 1.2 wt.%, more typically ≤ 1.0 wt.%, even more typically ≤ 0.7 wt.%, even more typically ≤ 0.5 wt.%, even more typically ≤ 0.3 wt.%, even more typically ≤ 0.1 wt.%.

The metal sulfide-containing material may be in any suitable form for the agglomeration step.

The metal sulfide-containing material may be in the form of as-mined material or stockpiled material that has been processed to be suitable for the agglomeration step.

The method may include comminuting as-mined or stockpiled material and producing a suitable particle size distribution for the agglomeration step.

The comminuting step may include crushing as-mined or stockpiled material in one or more than one comminution circuit that reduces the size of the material

The comminuting step may include crushing as-mined or stockpiled material successively in primary, secondary and tertiary comminution circuits, as these terms are understood by persons in the copper mining industry.

The comminuting step may include single or multiple crushing steps delivering crushed as-mined or stockpiled material to produce the material with a desired particle size distribution for the agglomeration step.

The pyrite may be 1-10 wt.% of the total mass of the metal sulfide-containing material and pyrite.

The pyrite may be obtained from any suitable source.

Typically, the pyrite source is from the mine.

For example, the pyrite may be in tailings, i.e. a pyrite-containing slurry, from a tailings dam or an ore processing plant, of the mine with the slurry being used directly in the agglomeration step.

The term "ore processing plant" is understood herein to mean any suitable plant for recovering a metal from a mined ore.

The word "ore" is understood herein to mean a natural rock or sediment that contains one or more valuable minerals, typically containing valuable metals, that can be mined, treated and sold at a profit.

By way of further example, the pyrite may be obtained by removing pyrite from a pyrite-containing slurry from a tailings dam or an ore processing plant of the mine and using the removed pyrite in the agglomeration step.

Typically, the pyrite removed from the pyrite-containing slurry is in a concentrate form.

The method may include a pyrite removal step for removing pyrite from a pyrite-containing slurry, for example from a tailings dam or an ore processing plant, and forming an inert stream - i.e. a stream that is less reactive than the input tailings to the pyrite removal step in terms of the amount of pyrite in the inert stream.

The pyrite-containing slurry may be processed in the pyrite removal step, for example by being beneficiated, by any method that recovers and concentrates pyrite from the slurry.

The pyrite removal step may include floating pyrite-containing material in the pyrite-containing slurry and producing (i) an inert stream as one flotation output and (ii) a pyrite-containing material stream, such as a pyrite-containing concentrate stream, as another flotation output.

The pyrite removal step may include, before the above flotation step, a size separation step, such as via cyclones or other suitable classification devices, that for example separates larger particles from the pyrite-containing slurry, with the remaining pyrite-containing slurry being transferred to the flotation step.

The term "cyclone" is understood herein to describe a device that can classify, separate or sort particles in a liquid suspension based on the ratio of their centripetal force to fluid resistance. This ratio is high for dense (where separation by density is required) and coarse (where separation by size is required) particles, and low for light and fine particles.

The pyrite removal step may include reducing the size of the larger particles in a size reduction circuit and returning the reduced-sized particles to the size separation step.

The pyrite removal step may include selecting the operating conditions for the size separation step so that pyrite particles in the pyrite-containing material in the remaining pyrite-containing slurry have a required particle size distribution for downstream processing of the tailings, for example in a heap leaching operation.

The pyrite removal step may include thickening and/or filtering the pyrite-containing material stream and de-watering the stream and forming a pyrite-containing concentrate.

The above-described method has the following advantages:
- The method makes it possible to extract a metal such as copper or nickel or zinc or cobalt from a metal sulfide-containing material that is "non-economic" from the perspective of recovering the metal from the metal sulfide-containing material.
- When the pyrite is in tailings (i.e. pyrite-containing slurry), the method makes it possible to process tailings that contain pyrite and thereby reduce the volumes of existing tailings dams. This is an important environmental outcome.
- The acid and heat generating capacity of pyrite is an advantage in leaching, such as heap leaching, and, for example, can reduce the amount of added acid that is required in the leach liquor.
- Moreover, the acid-generating capacity of pyrite means that the pyrite is used beneficially in the leach step and results in a net reduction in pyrite, which is significant from an environmental perspective.
- It is noted that any amounts of the metal, such as copper, nickel and zinc and cobalt, in the pyrite-containing material is a bonus - it is taken into the heap with pyrite and can be recovered in the heap leaching step.
- In addition to producing the above-mentioned pyrite, removing pyrite from tailings produces an inert stream - i.e. a stream that is less reactive than the input tailings to the pyrite removal method in terms of the amount of pyrite in the inert stream. This is beneficial because pyrite in tailings is an environmental problem because pyrite makes the tailings "acid generating tailings" and this is an issue for disposal of the tailings.
- The option of adding the pyrite-containing slurry directly in agglomeration if it contains sufficient pyrite so that a pyrite removal step is not necessary, is an efficient use of these tailings.
- The method can be operated with readily-available and tried and tested equipment.
- The method makes it possible to process what has been previously classified as waste materials, namely metal sulfide-containing material and tailings, and reduce the environmental impact of these materials as well as optimising the recovery of value from the originally-mined material.

The agglomeration step may be any suitable step for agglomerating the metal sulfide-containing material, such as a copper sulfide-containing material, and the pyrite-containing material.

The agglomeration step may include mixing and agglomerating the metal sulfide-containing material, such as a copper sulfide-containing material, and the pyrite-containing material.

The pyrite particles in the pyrite-containing material may have a particle size of P₈₀ of 1 mm or a value < 1 mm.

The pyrite particles in the pyrite-containing material may have a particle size of P₈₀ of 250 µm or a value < 250 µm.

The mixing step may be carried out before the agglomerating step.

The mixing and the agglomerating steps may be carried out simultaneously.

The leaching step may be any suitable leaching step.

The leaching step may be a heap leaching step.

The leaching step may include any suitable heap leaching steps that leach metal, such as copper or nickel or zinc or cobalt, from the metal sulfide-containing material in the heap of the agglomerates and recovers metal into solution.

In broad terms, the invention also provides a heap leaching method for a metal sulfide-containing material that contains a metal, such as copper or nickel or zinc or cobalt, or contains two or more of these metals, in a metal sulfide-containing material, the method comprising:
(a) leaching a heap of agglomerates of the metal sulfide-containing material and pyrite with a leach liquor, with the pyrite generating acid and heat that facilitates leaching metal from the metal sulfide-containing material and producing a pregnant leach liquor containing the metal in solution, typically with the pyrite being in or derived from a slurry containing pyrite, such as mine tailings, and with the microbes oxidising ferrous iron to ferric iron; and
(b) collecting the pregnant leach liquor from the heap.

The heap leaching method also comprises recovering the metal from the pregnant leach liquor.

The present invention also provides a heap leaching operation for leaching a metal, such as copper or nickel or zinc or cobalt, from a metal sulfide-containing material in a mined material, the heap leaching operation comprising:
(a) a heap of agglomerates of the metal sulfide-containing material and pyrite; and
(b) a system that (i) supplies leach liquor and microbes to the heap so that the leach liquor flows downwardly though the heap and leaches the metal from the metal sulfide-containing material and (ii) collects a pregnant leach liquor containing the metal in solution from the heap, with the pyrite generating acid and heat in the heap that facilitates leaching the metal from the metal sulfide-containing material, with pyrite being in or derived from a slurry containing pyrite, such as mine tailings, and with the microbes oxidising ferrous iron to ferric iron.

The metal sulfide-containing material may be derived from any suitable mined material.

As noted above, the term "mined material" is understood herein to include material that is mined and transferred from the mine (a) directly to downstream processing operation to recover a metal from the material or (b) to a stockpile and processed later.

In broad terms, the invention also provides a method of mining comprising:
(a) mining a metal sulfide-containing material, such as a copper-sulfide containing material; and
(b) the above-described method of recovering a metal, such as copper, nickel or zinc or cobalt, from the metal sulfide-containing material that is categorized by a mine operator as being "non-economic" from the perspective of recovering the metal from the material.

The method may include processing metal sulfide-containing ore in the metal sulfide-containing material in an ore processing plant and producing a pyrite-containing slurry for step (b).

The present invention also provides a flotation circuit for an ore processing plant for a metal sulfide-containing material, the flotation circuit including:
(a) a mill feed flotation circuit for producing a tailings stream and a concentrate stream from a mill feed, with the tailings stream comprising a metal sulfide-containing material; and
(b) a pyrite flotation circuit for producing a pyrite concentrate stream, i.e. a pyrite-containing slurry, and a tailings stream.

The pyrite concentrate stream may be a source of pyrite for the above-described method of recovering a metal, such as copper, nickel or zinc or cobalt, from a metal sulfide-containing material.

The pyrite flotation circuit may be configured to process the pyrite concentrate stream, i.e. a pyrite-containing slurry, in accordance with the above-described pyrite removal step and producing (i) the tailings stream as the inert stream and (ii) the pyrite concentrate stream as the pyrite-containing material stream.

The mill feed flotation circuit may be any suitable circuit.

The mill feed flotation circuit may include a rougher/scavenger cell and a bulk cleaner cell. These may be standard rougher/scavenger and bulk cleaner cells. These may be existing cells in an ore processing plant. They may be cells in a greenfield plant.

The rougher/scavenger and the bulk cleaner cells may be configured so that: (i) the rougher/scavenger cell processes the mill feed and produces a first tailings stream and a concentrate stream and (ii) the bulk cleaner cell processes the concentrate stream and produces a second tailings stream and another concentrate stream and transfers the other concentrate stream for further processing, such as metal recovery, and the second tailings stream to the pyrite flotation circuit for processing in that circuit.

The metal sulfide-containing material may be a copper sulfide-containing material, such as a copper sulfide-containing mineral.

The mill feed may be any suitable particle size distribution of the metal sulfide-containing material.

The ore processing plant may include any suitable upstream comminution circuits for producing the mill feed and downstream recovery and tailings storage of other options.

The present invention also provides an ore processing plant for a metal sulfide-containing material comprising the above flotation circuit.

The ore processing plant may also include any suitable upstream comminution circuits and downstream recovery and tailings storage and/or treatment options.

The metal sulfide-containing material may be a copper sulfide-containing material, such as a copper sulfide-containing mineral.

### BRIEF DESCRIPTION OF THE DRAWINGS

The invention is described further below by way of example only with reference to the following Figures, of which:
Figure 1 is a flow sheet of one embodiment of a method of processing, for example by beneficiating, pyrite-containing tailings, i.e. a pyrite-containing slurry, and using the pyrite removed from the tailings in downstream heap leaching of a copper sulfide-containing material;
Figure 2 is a graph of copper extraction versus leaching time for a series of column bioleach tests conducted on (i) a sample of ore from a copper mine, (ii) the copper ore augmented with finely pulverised museum grade pyrite and (iii) the copper ore augmented with pyrite concentrate produced by flotation of tailings produced at the copper mine; and
Figure 3 is a flow sheet of one embodiment of a flotation circuit for an ore processing plant in accordance with the invention.

### DESCRIPTION OF EMBODIMENTS

One embodiment of the invention described below is described in the context of recovering copper from a copper sulfide-containing material from a mine.

It is noted that the invention is not confined to copper and extends to other metals such as nickel or zinc or cobalt, in metal sulfide-containing materials from a mine.

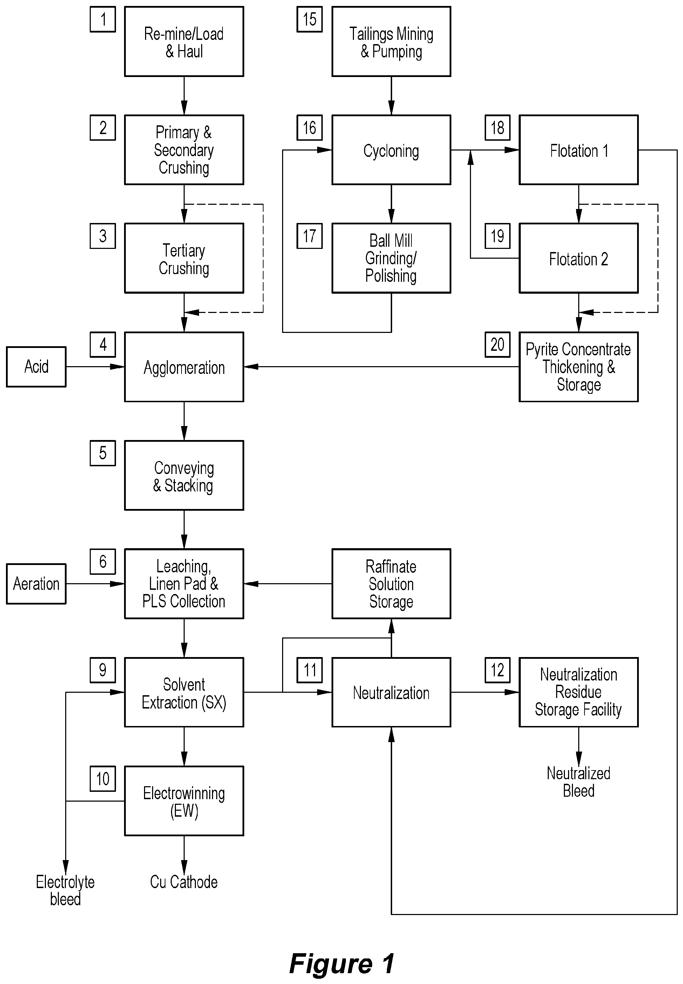

In general terms, the embodiment shown in Figure 1 is a method of mining comprising:
(a) mining and optionally stockpiling a copper sulfide-containing material, such as a copper sulfide-containing mineral;
(b) processing a copper sulfide-containing ore, as described herein, in the copper sulfide-containing material in an ore processing plant and (i) recovering copper and (ii) producing a pyrite-containing slurry;
(c) processing the pyrite-containing slurry and producing pyrite; and
(d) processing "non-economic" copper sulfide-containing material, as described herein, with pyrite in a heap leaching operation.

In more specific terms, the heap leaching operation shown in Figure 1 includes the steps of:
(a) processing a slurry containing pyrite from a tailings dam or the ore processing plant (not shown) of the mine and removing pyrite therefrom;
(b) forming agglomerates of the copper sulfide-containing material and pyrite from step (a);
(c) leaching the agglomerates, with pyrite facilitating recovery of copper from the copper sulfide-containing material, and forming a copper-containing liquor; and
(d) recovering copper from the copper-containing liquor.

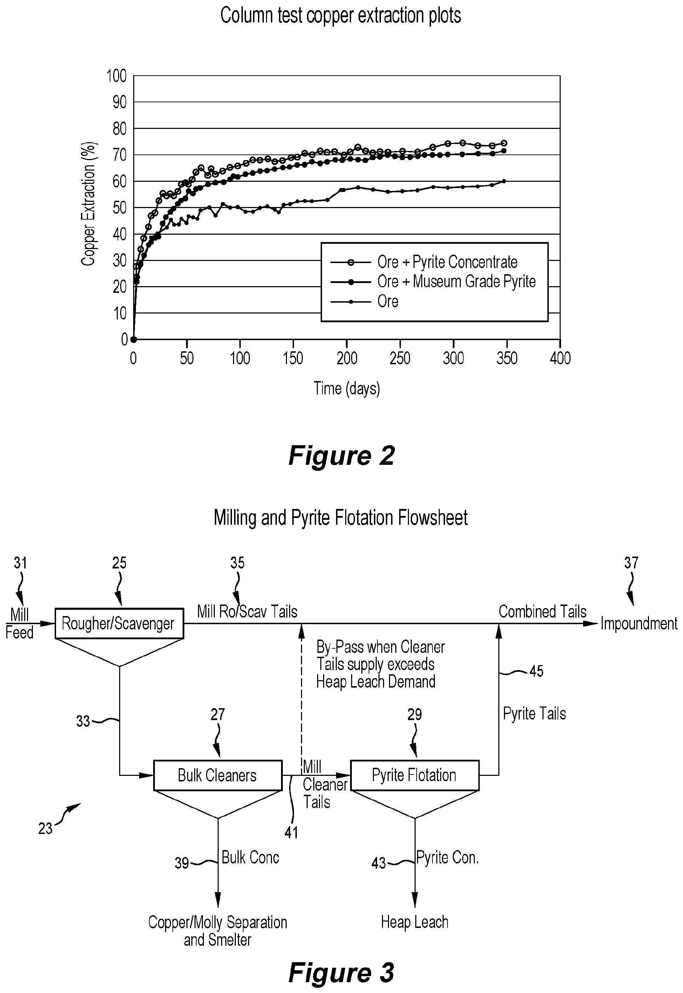

It is noted that the pyrite-containing slurry may be any suitable pyrite-containing slurry, such as tailings, from an ore processing plant. Example 2 and Figure 3 describe an embodiment of a flotation circuit in accordance with the invention for producing a suitable pyrite-containing slurry.

The "non-economic" copper sulfide-containing material is described in relation to Figure 1 in the context of waste rock, i.e. material that is "non-economic" to recover metals from using conventional recovery options, i.e. processing options used in commercial mines before the invention was made. The material may be as-mined material or stockpiled material. Typically, the copper concentration of the waste rock is ≤ 1.5% by weight, typically ≤ 1.2 wt.%, more typically ≤ 1.0 wt.%, even more typically ≤ 0.7 wt.%, even more typically ≤ 0.5 wt.%, even more typically ≤ 0.3 wt.%, even more typically ≤0.1 wt.%.

In addition, the embodiment of the method of recovering copper from a copper sulfide-containing material in accordance with the invention shown in Figure 1 is described in the context of the pyrite being a pyrite concentrate extracted from mine tailings.

It is understood that the invention is not confined to this embodiment and extends generally to any suitable copper-containing material and to any suitable source of pyrite.

### Processing the copper-containing material prior to forming agglomerates - steps 1, 2, 3

In the flow sheet shown in Figure 1, the copper sulfide-containing material is in the form of waste rock 1 that has been re-mined from stockpiles 1.

As noted above, currently, these waste rock stockpiles are considered too low grade to be economically processed for recovering copper by known conventional methods.

As noted above, the invention is not confined to this source of copper sulfide-containing material.

For example, the copper sulfide-containing material may be material that is considered too low grade to be economically processed for recovering copper by known conventional methods in test work carried out on a section of a mine before being mined (for example by drilling and blasting) and then, after mining, is transferred directly from the mine (without being stockpiled) for processing in steps 2 and 3.

The stockpiled waste rock 1 is transported in suitable vehicles, such as haul trucks or front-end loaders, for crushing and milling successively in primary, secondary and tertiary comminution circuits 2, 3 to the extent required to produce a suitable particle size distribution for the agglomeration step 4.

The comminution circuits 2, 3 may include single or multiple crushing steps delivering crushed copper-containing material to single or multiple **milling** and sizing steps to produce the comminution product stream having a desired particle size distribution for the agglomeration step 4.

The crushing steps 2, 3 may be carried out using any suitable combination of gyratory, cone and high pressure grinding roll (HPGR) crushers (not shown in the Figures).

The resultant comminuted copper sulfide-containing material is transferred to the agglomeration step 4.

### Agglomeration step 4

The agglomeration step 4 agglomerates:
(a) the comminuted copper sulfide-containing material produced in steps 2 and 3; and
(b) pyrite that, in this embodiment, is tailings-derived pyrite-containing concentrate (see below).

The agglomeration step 4 may be any suitable agglomeration step using any suitable apparatus, such as agglomeration drums.

By way of example, required ratios of the comminuted copper sulfide-containing material and the pyrite-containing concentrate are added to a mixing device and are mixed together, with or without a binder, with or without an acid, and with or without added water, and with or without recycled leach solution.

The required ratios depend on factors such as the amount of pyrite in the rock. Typically, a broad pyrite concentration range for the mixed product is from 1 - 10 % pyrite.

The selection of the binder and the acid and the addition of water and/or recycled leaching solution are a function of a number of factors, including the characteristics of the comminuted copper sulfide-containing material and the pyrite-containing concentrate and the required mechanical properties for the agglomerates.

The agglomeration step 4 may include any suitable protocol for adding and mixing the comminuted copper sulfide-containing material and the pyrite-containing concentrate and the binder and water, if required.

The agglomerates are stored in a stack 5 and are transferred to the heap leach steps described below.

### Heap leach and downstream solvent extraction and electrowinning steps 5, 6, 9, 10, 11, 12

The agglomerates from the stack 5 are formed into a heap 6 on a leach pad.

The heap 6 may be any suitable heap construction and is provided with:
(a) a leach liquor storage and delivery system to supply leach liquor to an upper surface of the heap;
(b) a pregnant leach liquor collection system for collecting leach liquor containing copper in solution that is extracted from copper sulfide-containing materials in agglomerates in the heap; and
(c) microbes (such as bacteria or archaea) or other suitable oxidants to oxidise ferrous iron to ferric iron, with the ferric iron being an oxidant in the leaching process.

The pregnant leach liquor is processed in a solvent extraction system 9 that extracts copper from the liquor in an organic medium and then strips copper from the organic medium and produces a copper-containing solution.

The copper-containing solution is transferred to an electrowinning plant 10 and copper is recovered from solution.

The raffinate from the solvent extraction system 9 is regenerated and returned to returned to the heap as leach liquor. The leach liquor regeneration system includes a raffinate bleed limestone/lime neutralization 11 to control the build-up of impurities, generating neutralized solids for separate impoundment or possibly co-impoundment with tailings.

The pyrite-containing concentrate in the agglomerates provides valuable sources of acid via the pyrite and heat.

The acid-generating properties of the pyrite mean that the amount of acid that has to be added to the leach liquor can be reduced to maintain a given leaching acid requirement.

In addition, the microbial oxidation of pyrite produces acid and heat, all of which are beneficial for heap leaching the copper sulfide-containing material.

### Separation steps 15, 16, 17, 18, 19, 20 for pyrite-containing tailings

As noted above, the pyrite for the agglomeration step 4 is mine tailings.

Typically, the tailings are an output of an ore processing plant for recovering copper from a copper sulfide-containing ore that contains copper sulfide-containing material, such as copper sulfide minerals.

The ore processing plant may be any suitable plant.

One example of an ore processing plant is one that includes comminution of mined ore involving a series of crushing and grinding stages and one or more than one flotation circuit for floating copper sulfide minerals from the comminuted ore (described above and in Example 2 as a "mill feed") and producing a valuable concentrate output and a tailings output (a pyrite-containing slurry).

Typically, the solids in the tailings are in the form of a slurry of (a) fines, with low concentrations of copper, typically less than 0.4 wt.%, more typically less than 0.3 wt.%, and (b) pyrite-containing particles suspended in water. Typically, these fines and pyrite-containing particles are slow to settle. The pyrite-containing particles may also contain some copper.

The tailings are transferred, for example by being pumped, from a tailings dam or other suitable source of tailings 15, such as directly from the ore processing plant, to a series of cyclones 16 or any other suitable size separation option that separates larger solids from the remaining fines-containing tailings.

The cyclones 16 may be any suitable cyclones.

The larger solids stream from the cyclones are processed in a size reduction circuit, such as a milling/grinding/polishing circuit 17.

The output of this circuit is returned to the cyclones 16 for further processing in the cyclones.

The operating conditions of the cyclones are selected so that the remaining tailings have a required particle size distribution for the heap leach step 5. In this regard, typically pyrite-containing particles in the remaining tailings have a particle size of P₈₀ of 1 mm or a value < 1 mm. More typically, pyrite particles in the remaining tailings have a particle size of P₈₀ of 250 µm or a value < 250 µm.

The remaining tailings from the cyclones 16 are transferred to a 1^{st} flotation circuit 18 (described in Example 2 in relation to Figure 3 as a "pyrite flotation cell") and are processed in the circuit. Suitable flotation reagents are added to the circuit as required. The operating conditions, including reagents, are selected to float pyrite-containing particles. Typically, these operating conditions will also float copper particles.

The underflow from the 1^{st} flotation circuit forms the abovementioned inert stream. As noted above, the term "inert" means that the stream is less reactive than the input slurry to the method in terms of the amount of pyrite in the stream. In the context of Figure 1 this means that the underflow stream is less reactive than the pyrite-containing tailings supplied to the method in terms of the amount of pyrite in the stream. As noted above, this is beneficial because pyrite in tailings is an environmental problem because pyrite makes the tailings "acid generating tailings" and this is an issue for disposal of the tailings. The method provides an opportunity to produce an output that is environmentally safe for use in downstream applications, such as in copper ore processing plants, and can reduce the oxidant (ferric iron) requirements. The ferric iron (produced by microbial oxidation of the ferrous iron that dissolves from the pyrite concentrate and iron-bearing minerals in the waste rock) oxidizes the pyrite and the copper sulfide minerals. In the embodiment of Figure 1, the underflow stream for the 1^{st} flotation circuit is transferred to a downstream neuralization step 11 described below.

The overflow, i.e. the floated stream from the 1^{st} flotation circuit is transferred to and processed in a 2^{nd} flotation circuit 19 (described in Example 2 in relation to Figure 3 as a "pyrite flotation cell").

The 2^{nd} flotation circuit 19 processes the floated stream from the 1^{st} flotation circuit. Suitable flotation reagents are added to the circuit as required. The operating conditions, including reagents are selected to float pyrite-containing particles.

The underflow from the 2^{nd} flotation circuit is transferred back to the 1^{st} flotation circuit.

The pyrite-containing floated stream from the 2^{nd} flotation circuit is transferred to thickeners 20 and de-watered and forms a pyrite-containing concentrate.

The pyrite-containing concentrate is transferred from the thickeners 20 to the agglomeration steps 4, 5 described above.

It is noted that, whilst the described embodiment has two flotation circuits 18, 19, the invention is not confined to this number of circuits.

It is also noted that, whilst the described embodiment includes cyclones 16 and a milling/grinding/polishing circuit 17 and returns material to the cyclones 16, the invention is not confined to this arrangement.

For example, the combination of the cyclones 16 and the milling/grinding/polishing circuit 17 would not be necessary if the particle size distribution in the tailings supplied from the tailings dam or other suitable source of tailings 15 is suitable for downstream processing after the separation steps.

By way of further example, the combination of the cyclones 16 and the milling/grinding/polishing circuit 17 would not be necessary where there are downstream steps to optimize the particle size distribution of pyrite particles in the pyrite-containing concentrate.

### Advantages of the embodiment shown in Figure 1

The advantages of the above-described embodiment shown in Figure 1, and the invention generally, include the following advantages:
- The method makes it possible to extract copper from a copper sulfide-containing material, such as a copper sulfide-containing material that has been categorized by a mine operator as being "non-economic" from the perspective of recovering copper from the material.
- The method makes it possible to process tailings and thereby reduce the volumes of existing tailings dams. This is an important environmental outcome. Tailings present significant environmental and safety risks during the lives of mines. There are substantial issues involved in maintaining tailings dams and remediating tailings dams at the end of the lives of mines. In addition, there are potential issues with structural integrity of tailings dams. From time to time, there are catastrophic collapses of tailings dams that have caused loss of life and considerable damage to areas downstream of the dams. Also, tailings often contain contaminants (such as pyrite) which present challenges for mine remediation. Pyrite in tailings poses a potential environmental hazard because the tailings can oxidize to produce an acidic effluent that requires treatment to neutralize the acidity and remove contaminants before it can be discharged.
- The acid and heat generating capacity of pyrite is an advantage in leaching, such as heap leaching, and, for example, can reduce the amount of added acid that is required in the leach liquor.
- Moreover, the acid-generating capacity of pyrite means that the pyrite is used beneficially in the leach step and results in a net reduction in pyrite, which is significant from an environmental perspective.
- It is noted that any amounts of copper in the pyrite-containing material is a bonus - it is taken into the heap with pyrite and can be recovered in the heap leaching step.
- In addition to producing the abovementioned pyrite, removing pyrite from tailings produces an inert stream - i.e. a stream that is less reactive than the input tailings to the pyrite removal method in terms of the amount of pyrite in the inert stream. This is beneficial because pyrite in tailings is an environmental problem because pyrite makes the tailings "acid generating tailings" and this is an issue for disposal of the tailings.
- The method can be operated with readily-available and tried and tested equipment.
- The method makes it possible to process what has been previously classified as waste materials, such as low-grade copper-containing material or waste rock and tailings, and reduce the environmental impact of these materials as well as optimising the recovery of value from the originally-mined material.

### Example 1

The applicant has carried out column bioleach tests to investigate the impact of pyrite augmentation on bioleaching of a copper ore.

The column bioleach tests evaluated copper extraction versus leaching time for (i) a sample of ore from a copper mine, (ii) the copper ore augmented with finely pulverised museum grade pyrite and (iii) the copper ore augmented with pyrite concentrate produced by flotation of tailings produced at the copper mine.

A sample of ore from a copper mine was crushed to <12 mm, with a P₈₀ of 9 mm and around 10 kg of this material was added to an agglomerating drum with water and concentrated sulfuric acid.

In tests with added pyrite, either nearly pure museum grade pyrite, or fine pyrite concentrate produced by flotation of tailings produced at a copper mine, was mixed with the ore in the agglomerating drum to increase, or augment, the pyrite content of the agglomerated material from 0.86 wt.% pyrite naturally present in the ore to 4.0 % pyrite. Both pyrite samples used were very fine with a P₁₀₀ of 150 µm. The samples were subjected to elemental and mineralogical analysis.

It is noted that the term "museum grade pyrite" is understood herein to mean a pyrite content of greater than 90 wt.%, typically greater than 95 wt.%, typically greater than 97 wt.%, or more typically greater than 99 wt.%. Museum grade pyrite may have a silver content of less than 1 mg/kg, typically less than 0.5 mg/kg, typically less than 0.2 mg/kg, or more typically less than 0.1 mg/kg.

Table 1 summarises the elemental and mineralogical compositions of the ore, the museum grade pyrite and the pyrite concentrate used in the tests.

**Table 1: Major elements and sulfide minerals in the ore and pyrite samples.**

| **Element or Mineral** | **Ore** | **Museum Grade Pyrite** | **Pyrite Concentrate** |
|---|---|---|---|
| Copper, % | 0.63 | 0.15 | 1.1 |
| Iron, % | 1.19 | 46.1 | 41.1 |
| Sulfur, % | 0.90 | 52.9 | 47.4 |
| Silver, ppm | 1.20 | 0.05 | 14.2 |
| Chalcopyrite, % | 1.10 | 0.40 | 1.5 |
| Chalcocite, % | - | - | 0.18 |
| Covellite, % | 0.11 | - | 0.06 |
| Bornite, % | 0.11 | - | 0.53 |
| Nukundamite, % | 0.10 | - | 0.03 |
| Pyrite, % | 0.86 | 99 | 85 |

Once mixed, the agglomerated material was loaded into 1 m high, 0.1 m diameter columns and allowed to cure for 2-5 days at room temperature before leaching commenced. During leaching, the temperature of the columns was controlled at 50 °C using a heating jacket and the column was aerated at 0.102 Nm³/h/tonne ore. The column was inoculated with ferrous iron-oxidising and sulfur-oxidising microorganisms and the irrigation solution, which initially contained 5 g/L ferric iron as ferric sulfate, was pumped into the top of the column through drippers, at 10 L/h/m², and collected at the base of the column.

The pH of the collected leach solution was adjusted to the target pH of 1.2 with sulfuric acid if required before recycling back to the top of the column. Solution samples were regularly taken for analysis of their metals and sulfate concentrations.

The irrigation solution had a sulfate concentration of about 20 g/L at the beginning of the leach. If the sulfate concentration in solution exceeded 120 g/L, due to addition of sulfuric acid and oxidation of the sulfide minerals, the solution was diluted to maintain a maximum of 120 g/L sulfate.

If the solution copper concentration exceeded 8 g/L, due to copper leaching, the solution was subjected to ion exchange to remove copper and reduce the solution copper concentration to maintain it at less than 8 g/L.

The column tests were under leach for 350 days. Upon completion of leaching, the columns were rinsed first with dilute sulfuric acid and then with water to remove dissolved metals and sulfate contained in the entrained leach solution. The columns were then emptied and the solids dried and assayed along with the final leach solution. Mass balances were conducted and the copper extraction reported on the basis of the calculated copper head assay.

Figure 2 is a graph depicting copper extraction versus leaching time for the three column tests and Table 2 summarises the copper and sulfide mineral extractions achieved.

**Table 2: Column test extraction results.**

| **Parameter** | | **Ore** | **Ore + Museum Grade Pyrite** | **Ore + Pyrite Concentrate** |
|---|---|---|---|---|
| Pyrite content, % | | 0.86 | 4.0 | 4.0 |
| Silver content, g Ag/kg CuFeS₂ | | 0.17 | 0.16 | 0.20 |
| Copper extraction, % | | | | |
| | - Overall | 59.7 | 71.2 | 74.1 |
| | - From the -150 µm fraction | 87.1 | 90.2 | 92.0 |
| Chalcopyrite extraction, % | | 63.2 | 62.0 | 70.5 |
| Chalcocite extraction, % | | - | - | 79.0 |
| Covellite extraction, % | | 57.7 | 64.9 | 66.8 |
| Bornite extraction, % | | 89.7 | 91.6 | 93.8 |
| Nukundamite extraction, % | | 44.2 | 78.4 | 88.1 |
| Pyrite extraction, % | | 50.0 | 90.2 | 89.4 |

The beneficial effect of augmenting the ore with pyrite on copper extraction is clearly evident from Figure 2 and Table 2.

Copper extraction was increased by 11.5% and 14.4 % by adding museum grade pyrite and pyrite concentrate respectively. The enhanced copper extraction is believed to be attributable to the increased availability of ferric iron provided by the oxidation and leaching of the added pyrite, which reacted rapidly due to its fine particle size (P₁₀₀ of 150 µm). This is evident from the pyrite extraction results shown in Table 2. Extraction of pyrite in the ore was only 50.0 % whereas extraction of pyrite from the ore augmented with the museum grade pyrite and pyrite concentrate was much higher, reaching 90.2 % and 89.4 % respectively.

Notably, copper extraction was very high from the minus 150 µm fines fraction in all three tests; 87.1% in the test on the ore, 90.2 % in the test on the ore augmented with museum grade pyrite, and 92.0 % in the test on the ore augmented with pyrite concentrate. The results demonstrate that very high copper extraction was achieved from the copper minerals contained in the ore fines as well as the copper minerals in the two pyrite augments, both of which had a P₁₀₀ particle size of minus 150 µm. The natural silver content of the column feed samples, expressed in Table 2 as g Ag/kg CuFeS₂, is believed to have had a beneficial catalytic effect and enhanced the recovery of copper from chalcopyrite (as taught in International application PCT/AU2018/050316 (WO 2018/184071) in the name of the applicant), particularly from the chalcopyrite in the fines fractions.

Thus, the invention provides a means of achieving very high copper extraction from copper minerals contained in the pyrite augment as well has high copper extraction from copper minerals contained in an ore.

### Example 2

The purpose of Example 2 is to show the effectiveness of removing pyrite from a pyrite-containing slurry produced in a flotation circuit in an ore processing plant.

Figure 3 is a flow sheet of one embodiment of a flotation circuit 23 for an ore processing plant in accordance with the invention.

The ore processing plant may include any suitable upstream comminution circuits and downstream recovery and tailings storage or other options (not shown).

The flotation circuit 22 shown in Figure 3 includes a rougher/scavenger cell 25 and a bulk cleaner cell 27. These may be standard rougher/scavenger and bulk cleaner cells. These may be existing cells in an ore processing plant. They may be cells in a greenfield plant.

The flotation circuit 22 shown in Figure 3 also includes a pyrite flotation cell 29 of the type described above in relation to Figure 1, noting that Figure 1 includes two cells 18, 19 and Figure 3 shows a single cell 29. It is noted that the invention extends to any suitable number of pyrite flotation cells, with size separation and re-grind options 16, 17 and other options for processing a feed material to the cells for example as illustrated in Figure 1, as may be required.

In use, a mill feed 31 is transferred to the rougher/scavenger cell 25, and the cell produces a concentrate stream 33 and a first tailings stream 35. The mill feed 31 may be any suitable mill feed, produced for example by combinations of crushing and grinding and size separation steps, which may be existing comminution circuits in an ore processing plant or purpose-designed circuits in a greenfield plant.

The first tailings stream 35 is transferred to an impoundment location 37. This may be a tailings dam or other tailings treatment options.

The concentrate stream 33 from the rougher/scavenger cell 25 is transferred to the bulk cleaner cell 27, and the cell produces a plant concentrate stream 39 and a second tailings stream 41.

The plant concentrate stream 39 from the bulk cleaner cell 27 is transferred for recovery of copper and other metals such as molybdenum. The recovery options may be any suitable options.

The second tailings stream 41 from the bulk cleaner cell 27 is transferred to the pyrite flotation cell 29, and the cell produces a pyrite-containing concentrate stream 43 and a third tailings stream 45.

The first and third tailings streams 35, 45 and, optionally, a part of the second tailings stream 41, are transferred to the impoundment location, such as tailings storage or other tailings treatment options.

The pyrite-containing concentrate stream 43 is transferred for further processing, such as agglomeration, and use in the above-described heap leaching circuit as shown in Figure 1.

The applicant carried out large-scale flotation testwork on a sample of a scavenger/cleaner tailings, i.e. the second tailings stream, in the pyrite flotation cell shown in Figure 3. The results are described below.

Table 3 summarises the composition of the pyrite concentrate obtained from a feed of scavenger/cleaner tailings, i.e. the second tailings stream, in the pyrite flotation cell.

The table shows the effectiveness of recovering of pyrite (and copper minerals - which is a considerable advantage) in the pyrite concentrate stream (see rows 1-10) from tailings using flotation.

The process produced a pyrite concentrate at a grade of 83% pyrite, 2.2% Cu and a rougher/scavenger tails at a pyrite grade less than 0.8 % pyrite.

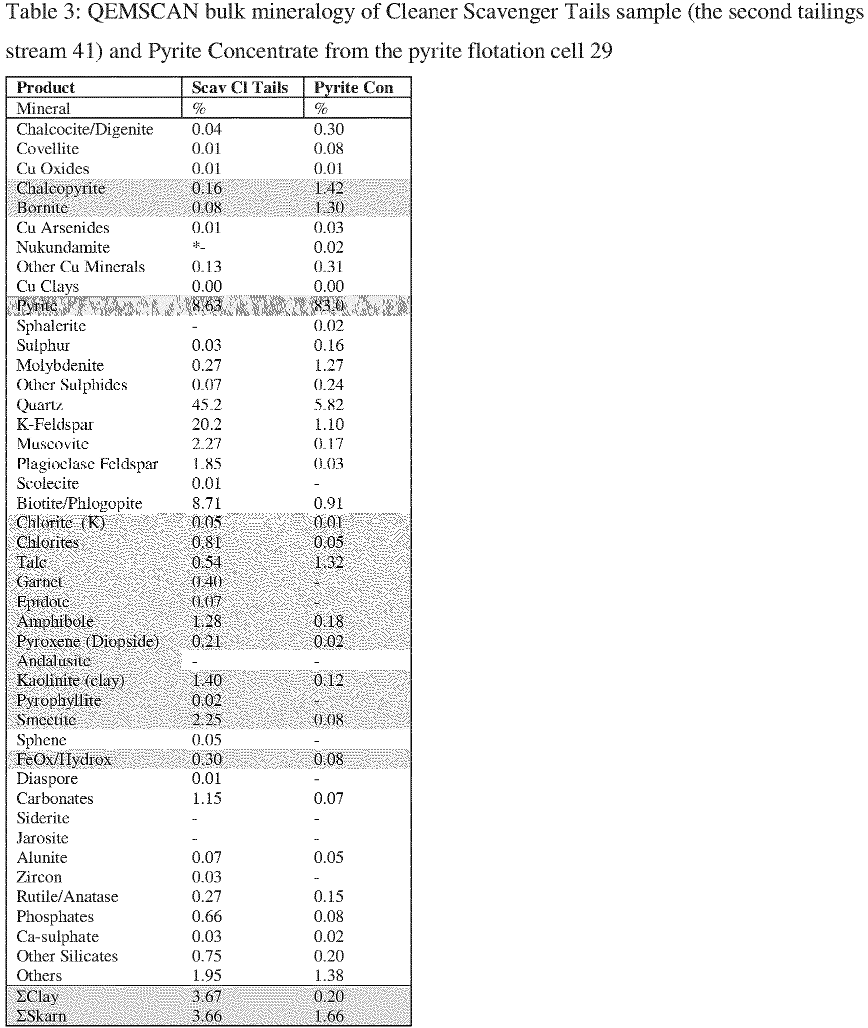

Table 4 provides a summary of key results from the large-scale pyrite flotation testwork and shows that 78 wt.% of the pyrite originally contained in the tailings sample was recovered to the pyrite concentrate.

**Table 4: Pyrite Balance from Flotation Tests**

| | Combine pyrite balance T#4- T#7 | | | |
|---|---|---|---|---|
| | kg | wt.% | % pyrite | Pyrite dist % |
| Combine rougher (RO) + Scavenger concentrate | 138.7 | 6.76 | 45.8 | 78.1 |
| Scavenger Tails | 1912 | 93.24 | 0.9 | 21.9 |
| Head Calculated | 2051 | 100 | 4 | 100 |

A grab sample of pyrite flotation feed, i.e. the second tailings stream 41, and pyrite flotation cell tails, i.e. the third tailings stream 45, was subjected to Acid/Base Accounting (ABA) testing. A summary of results is shown in Table 5.

**Table 5: ABA Tests on Pyrite Flotation Feed and Tails**

| | %S=Sulfur | %C in CO3 | Calc AP | Calc NP | NNP | Ratio |
|---|---|---|---|---|---|---|
| Pyrite Flotation Feed | 1.2 | 0.23 | 33 | 16 | -17 | 0.48 |
| Pyrite Flotation Tails | 0.12 | 0.24 | 2.8 | 18 | 15.2 | 6.42 |
| *AP & NP units tans calcium carbonate equivalent per 1,000 tans of solids.* | | | | | | |

The ABA results indicate a reduction in pyrite reporting to the tails (lower AP), i.e. the second and third tailings streams, 41, 45. A negative NNP (net neutralisation potential) indicates that the pyrite flotation cell feed, i.e. the second tailings stream 41, is a net acid generator and the greater than 1 ratio (6.42) for the pyrite flotation cell tails, i.e. the third tailings stream 45, indicates that the inert stream (i.e. flotation tails) can be used as ground cover/fill material.

It is evident from the above that the flotation circuit shown in Figure 3 is an effective circuit for producing a pyrite concentrate stream, i.e. pyrite containing slurry that can be used for example in the heap leaching operation described above in relation to Figure 1.

Many modifications may be made to the flow sheet of Figure 1 without departing from the spirit and scope of the invention.

By way of example, whilst the embodiment includes steps 1-3 to process waste rock to form the copper sulfide-containing material that is one feed for the agglomeration step 4, the invention is not confined to this combination of steps.

By way of further example, whilst the embodiment includes processing a slurry containing pyrite from a mine tailings and removing pyrite therefrom, the invention is not limited to this option and extends to the use of any suitable source of pyrite.

For example, the invention extends to adding pyrite-containing tailings directly in agglomeration if they contain sufficient pyrite so that a pyrite removal step is not necessary, is an efficient use of these tailings.

## Claims

1. A method of recovering copper from a low-grade copper-containing material comprising the steps of:
(a) obtaining a pyrite-containing slurry from a mine;
(b) mixing (i) the low-grade copper-containing material and (ii) pyrite in, or obtained from, the pyrite-containing slurry and forming agglomerates;
(c) heap leaching agglomerates from step (b) with a leach liquor and microbes, with pyrite generating acid and heat that facilitate recovering copper from the low-grade copper-containing material, and with the microbes oxidising ferrous iron to ferric iron, and forming a pregnant leach liquor containing copper; and
(d) recovering copper in solution from the pregnant leach liquor.

2. The method defined in claim 1 wherein the metal low-grade copper-containing material is in the form of as-mined material or stockpiled material.

3. The method defined in claim 2 further includes comminuting as-mined or as-stockpiled material.

4. The method defined in claim 3 wherein comminuting further includes crushing as-mined or stockpiled material in one or more than one comminution circuit that reduces the size of the as-mined or as-stockpiled material.

5. The method defined in claim 4 wherein crushing further includes crushing as-mined or as-stockpiled material successively in primary, secondary and tertiary comminution circuits.

6. The method defined in claim 1 further comprising mixing the low-grade copper-containing material and the pyrite-containing slurry in step (b).

7. The method defined in claim 1 wherein the method includes, prior to step (b), removing pyrite from the pyrite-containing slurry.

8. The method defined in claim 7 wherein removing pyrite from the pyrite-containing slurry further includes producing pyrite in a concentrate form.

9. The method defined in claim 7 wherein removing pyrite from the pyrite-containing slurry forms (i) a pyrite-containing material and (ii) an inert stream.

10. The method defined in claim 1 wherein mixing is carried out before forming agglomerates in step (b).

11. The method defined in claim 1 wherein mixing and forming agglomerates are carried out simultaneously in step (b).

## Patentansprüche

1. Verfahren zum Rückgewinnen von Kupfer aus einem minderwertigen kupferhaltigen Material, die folgenden Schritte umfassend:
(a) Erlangen einer pyrithaltigen Aufschlämmung aus einer Mine;
(b) Mischen (i) des minderwertigen kupferhaltigen Materials und (ii) Pyrit in der pyrithaltigen Aufschlämmung, oder das daraus erlangt wurde, und Bilden von Agglomeraten;
(c) Haufenlaugen von Agglomeraten aus Schritt (b) mit einer Laugflüssigkeit und Mikroben, wobei Pyrit Säure und Wärme erzeugt, die Rückgewinnen von Kupfer aus dem minderwertigen kupferhaltigen Material erleichtern, und wobei die Mikroben Eisen(II) zu Eisen(III) oxidieren und eine trächtige Laugflüssigkeit bilden, die Kupfer enthält; und
(d) Rückgewinnen von gelöstem Kupfer aus der trächtigen Laugflüssigkeit.

2. Verfahren nach Anspruch 1, wobei das metallische minderwertige kupferhaltige Material in der Form von abgebautem Material oder gelagertem Material vorliegt.

3. Verfahren nach Anspruch 2, das ferner Zerkleinern von abgebautem oder gelagertem Material umfasst.

4. Verfahren nach Anspruch 3, wobei Zerkleinern ferner Zermahlen von abgebautem oder gelagertem Material in einem oder mehr als einem Zerkleinerungskreislauf beinhaltet, der die Größe des abgebauten oder gelagerten Materials reduziert.

5. Verfahren nach Anspruch 4, wobei Zerkleinern ferner Zermahlen von abgebautem oder gelagertem Material nacheinander in primären, sekundären und tertiären Zerkleinerungskreisläufen beinhaltet.

6. Verfahren nach Anspruch 1, ferner umfassend Mischen des minderwertigen kupferhaltigen Materials und der pyrithaltigen Aufschlämmung in Schritt (b).

7. Verfahren nach Anspruch 1, wobei das Verfahren vor Schritt (b) Entfernen von Pyrit aus der pyrithaltigen Aufschlämmung beinhaltet.

8. Verfahren nach Anspruch 7, wobei Entfernen von Pyrit aus der pyrithaltigen Aufschlämmung ferner Herstellen von Pyrit in einer konzentrierten Form beinhaltet.

9. Verfahren nach Anspruch 7, wobei Entfernen von Pyrit aus der pyrithaltigen Aufschlämmung (i) ein pyrithaltiges Material und (ii) einen inerten Strom bildet.

10. Verfahren nach Anspruch 1, wobei Mischen vor Bilden von Agglomeraten in Schritt (b) durchgeführt wird.

11. Verfahren nach Anspruch 1, wobei Mischen und Bilden von Agglomeraten gleichzeitig in Schritt (b) durchgeführt wird.

## Revendications

1. Procédé destiné à récupérer du cuivre à partir d'un matériau contenant du cuivre à faible teneur comprenant les étapes suivantes :
(a) obtention d'une boue contenant de la pyrite à partir d'une mine ;
b) mélange (i) du matériau contenant du cuivre à faible teneur et (ii) de la pyrite dans la boue contenant de la pyrite ou obtenue à partir de celle-ci, et formation d'agglomérats ;
(c) lixiviation en tas des agglomérats issus de l'étape (b) avec une liqueur de lixiviation et des microbes, la pyrite générant de l'acide et de la chaleur qui facilitent la récupération de cuivre à partir du matériau contenant du cuivre à faible teneur, et les microbes oxydant le fer ferreux en fer ferrique, et formation d'une liqueur de lixiviation enrichie contenant du cuivre ; et
(d) récupération de cuivre en solution à partir de la liqueur de lixiviation enrichie.

2. Procédé selon la revendication 1 dans lequel le matériau métallique contenant du cuivre à faible teneur se présente sous la forme d'un matériau extrait d'une mine ou d'un matériau stocké.

3. Procédé selon la revendication 2 comportant en outre le broyage du matériau brut d'extraction ou de stockage.

4. Procédé selon la revendication 3 dans lequel le broyage comporte en outre le concassage du matériau brut d'extraction ou de stockage dans un ou plusieurs circuits de broyage qui réduisent la taille du matériau brut d'extraction ou de stockage.

5. Procédé selon la revendication 4 dans lequel le concassage comporte en outre le concassage successif du matériau brut d'extraction ou de stockage dans des circuits de broyage primaire, secondaire et tertiaire.

6. Procédé selon la revendication 1 comprenant en outre le mélange du matériau contenant du cuivre à faible qualité et de la boue contenant de la pyrite à l'étape (b) .

7. Procédé selon la revendication 1, le procédé comportant, avant l'étape (b), le retrait de la pyrite de la boue contenant de la pyrite.

8. Procédé selon la revendication 7 dans lequel le retrait de la pyrite de la boue contenant de la pyrite comporte en outre la production de pyrite sous forme de concentré.

9. Procédé selon la revendication 7 dans lequel le retrait de la pyrite de la boue contenant de la pyrite forme (i) un matériau contenant de la pyrite et (ii) un courant inerte.

10. Procédé selon la revendication 1 dans lequel le mélange est réalisé avant la formation d'agglomérats à l'étape (b).

11. Procédé selon la revendication 1 dans lequel le mélange et la formation d'agglomérats sont réalisés simultanément à l'étape (b).
